# EUROPEAN PATENT SPECIFICATION

(11) **EP 0 516 940 B1**
(45) Date of publication and mention of the grant of the patent: **28.02.1996**
(21) Application number: 92106004.2
(22) Date of filing: 07.04.1992
(51) Int. Cl.: G02B 27/00

(54) **Apparatus for viewing data in a vehicle**
Vorrichtung für die Betrachtung von Daten in einem Fahrzeug
Appareil pour visionner des données dans un véhicule

(30) Priority: 24.04.1991 IT TO910309
(43) Date of publication of application: 09.12.1992
(73) Proprietor: MAGNETI MARELLI S.p.A., I-20145 Milano (IT)
(72) Inventor: Pairetti Bartolomeo, 10100 Torino (IT); Varalda Giuseppe, 10100 Torino (IT); Caruso, Pietro, 20012 Cuggiono (IT)
(74) Representative: Cerbaro, Elena

(56) References cited:
- EP-A- 0 194 196
- EP-A- 0 200 407
- EP-A- 0 340 485
- WO-A-87/06017
- DE-A- 2 519 308
- DE-A- 3 347 271
- GB-A- 2 022 285
- PATENT ABSTRACTS OF JAPAN vol. 9, no. 236 (P-390)(1959) & JP A 6088926

## Description

The present invention relates to apparatus for viewing data in a vehicle. A prior art device is known from DE-A-33 47 271.

In particular the present invention relates to an apparatus allowing displaying in predetermined zones disposed in front of the driver of a vehicle, of virtual images disposed at a greater distance than that between the driver's eyes and the zones.

As is known, much information useful for the correct driving of a vehicle is visible by observation of the various indicators and instruments disposed on the vehicle's instrument panel. Such observation is inconvenient and somewhat tiring because of the fact that, during driving, the driver continuously observes the external environment and the road, focusing his vision substantially at infinity whilst, when it is necessary to observe the instruments on the instrument panel, this focusing must be modified rapidly to allow extremely close objects to be brought into focus.

The object of the present invention is to provide an apparatus for viewing data in a vehicle, able to eliminate or, at least significantly attenuate, the disadvantages described with reference to the known art.

According to the present invention, which is defined in claim 1, there is provided an apparatus for viewing data in a vehicle, comprising an emitter-projector unit for at least two separate blocks of images corresponding to respective blocks of data to be displayed, deflector units for deflecting the said blocks of images disposed along the paths of the blocks of images themselves, and operable to render such paths divergent, and respective reflecting means, disposed along these paths, operable to direct the blocks of images coming from the said deflector units towards the eyes of the vehicle driver.

The present invention will now be described, purely by way of non-limitative example, with reference to the attached drawings, in which:
- Figure 1 is a schematic view of a viewing apparatus formed according to the principles of the present invention; and
- Figure 2 is a detail on an enlarged scale, of Figure 1.

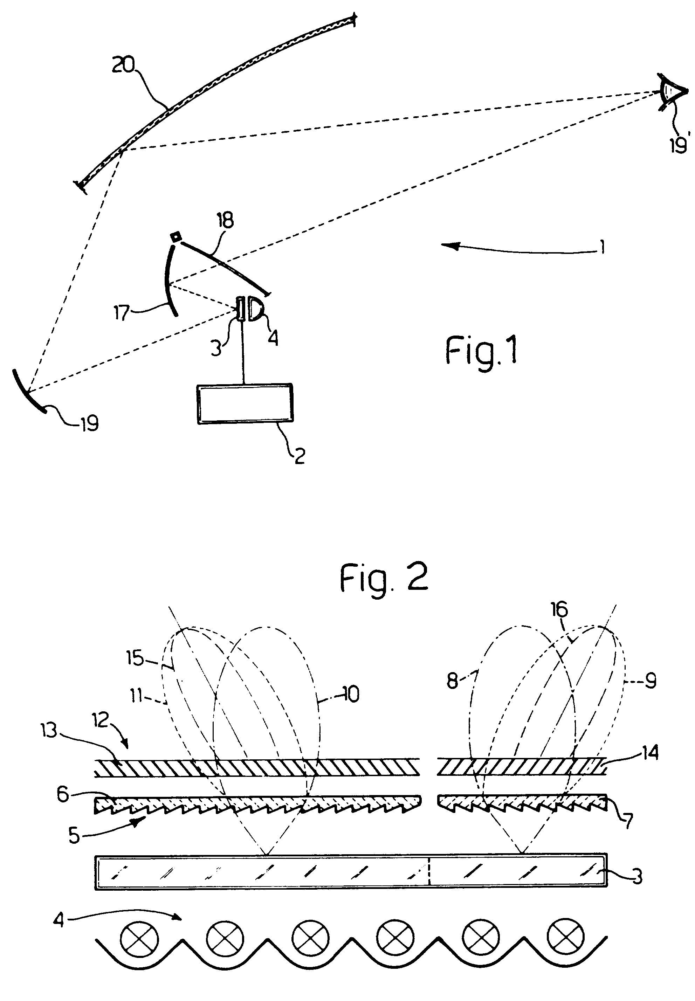

With reference to Figure 1, the reference numeral 1 generally indicates a data viewing apparatus disposed in a vehicle, not illustrated. The apparatus 1 comprises a central processing unit 2 adapted to send data constituted by images such as numbers, letters or symbols, to a display 3, for example of the back-lit liquid crystal type illuminated by illuminator means 4 disposed rearwardly thereof.

As illustrated in Figure 2, in front of the display 3, which, as will become clear hereinbelow, constitutes an emitter-projector unit for at least two separate blocks of images corresponding to respective blocks of data to be displayed, there is disposed a microprism screen 5 of type known per se, operable to divert the light rays which traverse it, in the specific example the luminous images coming from the display 3, through a determined angle. This microprism screen 5 is divided vertically into lower and upper sections or directional microprism filters 6 and 7, which hereinafter will also be termed "deflector units" and are respectively illustrated to the left and right of Figure 2, in which the microprisms, defining in combination with one another in the region of each section 6 and 7, a substantially saw tooth surface, are disposed respectively in such a manner as to deflect the light rays upwardly and downwardly respectively as the light traverse the sections 6 and 7.

Consequently, still with reference to Figure 2, an image emitted by the display 3 and intersecting the section 7 in the form of a light ray or lobe 8, after having traversed the section 7 itself, has the form of a light ray or lobe 9 inclined upwardly (towards the right in Figure 2) whilst an image emitted by the display 3 and intersecting, in the form of a light ray or lobe 10 the section 6, after having traversed the section 6 itself presents the form of a light ray or lobe 11 inclined downwardly (towards the left in Figure 2).

In front of the microprism screen 5, on the opposite side of the microprism screen 5 from the display 3, there is disposed an obscuring screen 12 of type known per se, divided vertically into two "venetian blind" screens 13 and 14, a lower and an upper screen respectively, illustrated to the left and right respectively in Figure 2. The shape of the venetian screens 13 and 14, which will also hereinafter be termed "restrictor means" for the light rays corresponding to the image blocks coming from the microprism screen 5, is such as to restrict the said light rays or lobes 11 and 19 to give rise to respective light rays or lobes 15 and 16 of reduced dimensions. It is to be noted that the function of the said directional microprism filters 6 and 7 and of the venetian screens 13 and 14 is to prevent the said images corresponding to the light rays or lobes 10 and 8 from being even partially superimposed.

The light lobe 16, coming from the directional microprism filter 7 and the venetian screen 14 arrives at a mirror 17 which, in practice, is constituted by the instrument panel or dashboard of the vehicle, and from this mirror 17 is reflected through a transparent protective panel or dashboard cover 18, towards the eyes 19' of the vehicle driver. It will be noted that this mirror 17, if desired, could also be adapted to enlarge the images coming from the display 3 in known manner.

The light lobe 15, coming from the directional microprism filter 6 and the venetian shutter 13, arrives at a reflecting screen 19 and, from this reflecting screen 19, is reflected towards the internal surface of the vehicle windscreen 20 which in turn reflects it towards the eyes 19' of the vehicle driver. It is to be noted that the reflecting screen 19 also, if desired, can be adapted to enlarge images coming from the display 3 in known manner.

In use, the light lobes or rays 15 and 16, corresponding to the images emitted from different regions, upper and lower regions respectively, of the display 3, are restricted and made to diverge from one another by passage in succession through the directional microprism filters 6 and 7 and through the venetian shutters 13 and 14, and give rise to corresponding images which can be seen by the driver of the said vehicle on the said mirror 17 and on a portion of the internal surface of the vehicle windscreen 20 respectively. The first of these images is a virtual image which, to the eyes 19' of the vehicle driver, comes not from a distance equal to that separating the eyes 19' from the mirror 17, but rather from a distance, for example 1.2 metres, equal to this plus the length of the path the light ray or lobe 15 travels to reach the mirror 17 from the display 3.

Similarly, the second of the said images is a virtual image which, to the eyes 19' of the vehicle driver, comes not from a distance equal to that separating the eyes 19' from the said portion of the inner surface of the windscreen 20, but rather from a distance, for example 2 metres, corresponding to this distance plus the length of the path the light ray or lobe 16 travels to reach the reflecting screen 19 from the display 3, in turn increased by the length of the path the light ray or lobe 16 travels to reach the windscreen 20 from the reflecting screen 19.

Consequently, the vehicle driver, in order to view, for example information of vital importance to the driving of the vehicle, such as the alarm signals relating to the functioning of the engine, must displace his view only slightly from the road, bringing it to the lower part of the windscreen 20, and has no need significantly to modify his focusing in that the information which can be viewed in this part of the windscreen 20 comes, in practice, from a distance of at least two metres. In this way the images relating to the information viewed are superimposed to those of the road.

On the other hand, for the purpose of viewing information of lesser importance, such as, for example, the direction indicators, with a modest effort to bring it into focus, the driver must displace his view onto the mirror 17, that is to say onto the vehicle dash board, with this act gathering images coming from a distance substantially equal to 1.2 metres. It is noted that, naturally, by replication of one and/or the other of the optical units described, there could be more than two data-viewing zones, on the condition that the display 3 emits, from different zones, different blocks of images to be treated with the various optical units envisaged. It is moreover noted that the said microprism directional filters 6 and 7 and the said venetian screens 13 and 14 could be replaced by other technically equivalent optical units.

## Claims

1. Apparatus for presenting image data to a person driving a vehicle, comprising:
a display panel (3) connected to a central processing unit (2) such that first and second blocks of image data (8, 10) can be displayed in respective first and second separated regions of said display panel (3), and means (4) for projecting the displayed image data in a direction substantially perpendicular to the main surface of said panel (3),
first and second deflector elements (7, 6), each one located in front of a respective one of said first and second panel regions, for deflecting image light from said regions into respective first and second optical paths (9, 11) whose main directions are divergent with respect to each other, and
first and second reflecting means (17, 19, 20) respectively disposed in said first and second optical paths (9, 11) for directing said first and second blocks of image data towards the position of the eyes (19') of the person driving the vehicle.

2. An apparatus according to claim 1, wherein
said first reflecting means (17) includes a first reflecting screen (17) disposed on the vehicle dash board for receiving said first block of image data from said first panel region and for directing it directly towards the eyes (19') of the person driving the vehicle, and
said second reflecting means (19, 20) includes a second reflecting screen (19) for receiving said second block of image data from the said second panel region and a third reflecting screen (20) located for receiving the said second block of image data from the said second reflecting screen (19) and for directing it towards the eyes (19') of the person driving the vehicle.

3. An apparatus according to claim 2, wherein said third reflecting screen (20) is constituted by an internal portion of the vehicle windscreen.

4. An apparatus according to any one of the preceding claims, wherein said deflector elements include directional microprism filters (6,7).

5. An apparatus according to any one of the preceding claims, further including restrictor means (13,14) disposed in said first and second optical paths (9, 11) between said deflector elements (6,7) and said reflecting means (19, 17), for restricting the dimensions of each of the light lobes corresponding to said first and second blocks of image data.

6. An apparatus according to claim 5, wherein said restrictor means include venetian screens (13, 14).

## Patentansprüche

1. Vorrichtung zum Anzeigen von Bilddaten für eine ein Fahrzeug führende Person mit
einem derart mit einer zentralen Verarbeitungseinheit (2) verbundenen Display (3), daß erste und zweite Sätze von Bilddaten (8, 10) in jeweiligen ersten und zweiten getrennten Bereichen des Displays (3) angezeigt werden können,
Mitteln (4) zum Projizieren der angezeigten Bilddaten in einer im wesentlichen rechtwinklig zur Haupt-Oberfläche des Displays (3) verlaufenden Richtung,
ersten und zweiten Ablenk-Elementen (6, 7) zum Ablenken von Bildlicht aus den Bereichen auf entsprechende erste und zweite optische Strahlengänge (9, 11), deren Hauptrichtungen divergent zueinander verlaufen, wobei jedes Ablenkelement (6, 7) vor dem jeweiligen Bereich der ersten und zweiten Tafel-Bereiche angeordnet ist, und
mit ersten und zweiten reflektierenden Mitteln (17, 19, 20), die jeweils in den ersten und zweiten optischen Strahlengängen (9, 11) angeordnet sind, zum Richten der ersten und zweiten Sätze von Bilddaten in Richtung auf die Position der Augen (19') der das Fahrzeug führenden Person.

2. Vorrichtung nach Anspruch 1, dadurch gekennzeichnet, daß die ersten reflektierenden Mittel (17) einen auf dem Fahrzeug-Armaturenbrett angeordneten ersten reflektierenden Schirm (17) zum Aufnehmen des ersten Satzes von Bilddaten aus dem ersten Tafel-Bereich und Richten dieses Satzes direkt in Richtung auf die Augen (19') der das Fahrzeug führenden Person aufweisen und daß die zweiten reflektierenden Mittel (19, 20) einen zweiten reflektierenden Schirm (19) zum Aufnehmen des zweiten Satzes von Bilddaten aus dem zweiten Tafelbereich und einen dritten reflektierenden Schirm (20) aufweisen, welcher derart angeordnet ist, daß er den zweiten Satz von Bilddaten von dem zweiten reflektierenden Schirm (19) aufnimmt und ihn in Richtung der Augen (19') der das Fahrzeug führenden Person richtet.

3. Vorrichtung nach Anspruch 2, dadurch gekennzeichnet, daß der dritte reflektierende Schirm (20) von einem inneren Abschnitt der Fahrzeug-Windschutzscheibe gebildet wird.

4. Vorrichtung nach einem der vorangehenden Ansprüche, dadurch gekennzeichnet, daß die Ablenkelemente Mikroprismen-Richtungsfilter (6, 7) aufweisen.

5. Vorrichtung nach einem der vorangehenden Ansprüche, dadurch gekennzeichnet, daß Blendenmittel (13, 14) zum Beschränken der Dimensionen der den ersten und zweiten Sätzen von Bilddaten entsprechenden Lichtstrahlenkeulen in den ersten und zweiten optischen Strahlengängen (9, 11) zwischen den Ablenkelementen (6, 7) und den reflektierenden Mitteln (19, 17) angeordnet sind.

6. Vorrichtung nach Anspruch 5, dadurch gekennzeichnet, daß die Blendenmittel Jalousieblenden (13, 14) aufweisen.

## Revendications

1. Appareil pour présenter des données d'images à une personne conduisant un véhicule, comprenant:
un panneau d'affichage (3) connecté à une unité centrale de traitement (2), tel qu'un premier et un second blocs de données d'images (8,10) puissent être affichés dans une première et une seconde régions distinctes respectives dudit panneau d'affichage (3), et un moyen (4) pour projeter les données d'image affichées dans une direction sensiblement perpendiculaire à la surface principale dudit panneau (3),
un premier et un second éléments déflecteurs (7, 6), situés chacun devant une région respective desdits première et seconde région du panneau, pour dévier la lumière d'image desdites régions dans un premier et un second chemins optiques respectifs (9, 11), dont les directions principales sont divergentes les unes par rapport aux autres, et
un premier et un second moyens réflecteurs (17, 19, 20) disposés respectivement dans lesdits premier et second chemins optiques (9, 11), pour diriger lesdits premier et second blocs de données d'images vers la position des yeux (19') de la personne conduisant le véhicule.

2. Appareil selon la revendication 1, dans lequel
ledit premier moyen réflecteur (17) comporte un premier écran réflecteur (17) situé sur le tableau de bord du véhicule, destiné à recevoir ledit premier bloc de données d'images provenant de ladite première région du panneau, et pour le diriger directement vers les yeux (19') de la personne conduisant le véhicule, et
ledit second moyen réflecteur (19, 20) comporte un second écran réflecteur (19), destiné à recevoir ledit second bloc de données d'images provenant de ladite seconde région du panneau, et un troisième écran réflecteur (20), disposé pour recevoir ledit second bloc de données d'images provenant dudit second écran réflecteur (19), et pour le diriger vers les yeux (19') de la personne conduisant le véhicule.

3. Appareil selon la revendication 2, dans lequel ledit troisième écran réflecteur (20) est constitué par une partie interne du pare-brise du véhicule.

4. Appareil selon l'une quelconque des revendications précédentes, dans lequel lesdits éléments déflecteurs comportent des filtres à microprismes directifs (6, 7).

5. Appareil selon l'une quelconque des revendications précédentes, comportant en outre des moyens de restriction (13, 14), placés dans lesdits premier et second chemins optiques (9, 11), entre lesdits éléments déflecteurs (6, 7) et lesdits moyens réflecteurs (19, 17), pour limiter les dimensions de chacun des lobes lumineux correspondant auxdits premier et second blocs de données d'image.

6. Appareil selon la revendication 5, dans lequel lesdits moyens de restriction comportent des écrans vénitiens (13, 14).
